# EUROPÄISCHE PATENTANMELDUNG

(11) **EP 1 220 566 A2**
(43) Veröffentlichungstag der Anmeldung: **03.07.2002**
(21) Anmeldenummer: 01811106.2
(22) Anmeldetag: 19.11.2001
(51) Int. Cl.: H04Q 11/04

(54) **Datenübertragungseinheit zur Erstellung einer digitalen Cross-Connect-Verbindung**

(30) Priorität: 27.12.2000 DE 10065929
(71) Anmelder: ABB Schweiz AG, 5400 Baden (CH)
(72) Erfinder: Kormann, Marcel, 5400 Baden (CH); Koller, Erwin, 8810 Horgen (CH)
(74) Vertreter: ABB Patent Attorneys

(57) **Zusammenfassung**

In einem Verfahren zur Erstellung einer digitalen synchronen Cross-Connect-Verbindung zwischen Datenübertragungseinheiten, welche mit Schnittstellen von Benutzergeräten verbunden sind, werden asynchronen Schnittstellen ein additives Neutralelement zugeordnet und Datensignale, welche in einer Datenübertragungseinheit über verschiedene Datenkanäle empfangen worden sind, werden miteinander addiert. Dadurch ist es möglich, in einer synchronen Cross-Connect-Verbindung auch asynchrone Teilnehmer aufzunehmen.

## Beschreibung

### Technisches Gebiet

Die Erfindung betrifft ein Verfahren zur Erstellung einer digitalen Cross-Connect-Verbindung sowie eine Datenübertragungseinheit gemäss dem Oberbegriff des Patentanspruches 1 beziehungsweise 5.

### Stand der Technik

In der Telekommunikation werden Benutzersignale, wie zum Beispiel Telephongespräche oder Daten, über Datenübertragungseinheiten, sogenannte Accessmultiplexer, an schnelle breitbandige Übertragungsgeräte übermittelt, welche die Benutzersignale in ein, im allgemeinen breitbandiges Kommunikationsnetz speisen. Diese Übertragungseinheiten dienen des weiteren dazu, von anderen Datenübertragungseinheiten, auch Gegenstationen genannt, in das Kommunikationsnetz gespeiste Benutzersignale zu empfangen und an Benutzergeräte weiterzuleiten.

Die Datenübertragungseinheiten weisen deshalb benutzergerätseitig eine Schnittstelle zur Verbindung mit mehreren Benutzergeräten und netzseitig breitbandige Übertragungsgeräte auf, welche Daten direkt in das Kommunikationsnetz speisen oder an übergeordnete, mit dem Netz verbundene Übertragungsgeräte weiterleiten. Die Datenübertragungseinheiten haben die Aufgabe, von den Benutzergeräten gelieferte Benutzersignale geeignet zu verarbeiten und in ein Format, ein sogenanntes Übergabeprotokoll, umzuwandeln, welches die anderen Übertragungseinheiten beziehungsweise deren jeweilige Benutzergeräte verstehen. Bekannte und normierte Übergabeprotokolle sind beispielsweise ITU-T G703 und ITU-T G704. Diese Übergabeprotokolle definieren unter anderem, in welchem Rahmenformat Zeitschlitze organisiert sind, wie viele Benutzerkanäle in einen Rahmen passen und wie oft ein solcher Rahmen pro Zeiteinheit aktualisiert wird.

Heutige Accessmultiplexer sind oftmals mit einem Digitalen Cross-Connect-System (DCC-System) ausgestattet, welches jeden eingehenden Datenübertragungskanal mit jedem ausgehenden Datenübertragungskanal verbinden kann. Dabei verwaltet das DCC-System die jeweiligen Verbindungen der einzelnen Datenübertragungseinheiten. Insbesondere ist das DCC-System für die korrekte Zuordnung der jeweiligen Verbindung zu den Zeitschlitzen des Übergabeprotokolls zuständig.

Benutzersignale lassen sich prinzipiell auf zwei Arten über das Kommunikationsnetz übertragen: synchron oder asynchron. Bei der synchronen Datenübertragung werden pausenlos Signale übertragen, wobei im Falle, dass keine Informationen übermittelt werden, ein Neutralelement übermittelt wird. Bei der asynchronen Datenübertragung werden nur Signale übertragen, wenn dies nötig ist. Dazwischen ist das Kommunikationsnetz ruhig. Die Verbindung von synchroner und asynchroner Datenübertragung gestaltet sich jedoch relativ schwierig, da synchrone Teilnehmer ständig auf Informationen warten und auch solche aussenden. Gelöst wird dieses Problem im Stand der Technik dadurch, dass jedem asynchronen Teilnehmer ein synchrones Datenübertragungsgerät zugeordnet wird, welches in einem Protokoll festhält, ob Benutzersignale vorhanden sind oder nicht. Sind Benutzersignale vorhanden, werden diese übermittelt, im anderen Fall übermittelt das Datenübertragungsgerät den anderen Teilnehmern ständig ein Pausensignal mit der Information, dass keine Benutzersignale übermittelt werden. Diese Lösung erfordert jedoch eine relativ aufwendige und teure anwendungsspezifische Konfiguration der Datenübertragungseinheiten. Zudem ist eine Datenkollision kaum oder nur mit aufwendigen Mitteln zu vermeiden.

### Darstellung der Erfindung

Es ist deshalb Aufgabe der Erfindung, ein Verfahren zur Datenübertragung sowie eine Datenübertragungseinheit zu schaffen, welche eine flexible, Datenkollisionen erkennende synchrone Cross-Connect-Verbindung auch mit asynchronen Teilnehmern ermöglichen.

Diese Aufgabe löst ein Verfahren zur Datenübertragung sowie eine Datenübertragungseinheit mit den Merkmalen des Patentspruches 1 beziehungsweise 5.

Erfindungsgemäss weist die Datenübertragungseinheit ein Zuordnungsmittel auf, um jeder Schnittstelle eines mit ihr verbundenen Benutzergerätes oder Klienten ein additives Neutralelement zuzuordnen, welches einen inaktiven Zustand des Benutzergerätes kennzeichnet und welches bei Fehlen von Benutzersignalen gesendet wird. Im Falle von asynchronen Schnittstellen wird ein Neutralelement definiert, im Falle von synchronen Schnittstellen wird vorzugsweise das bereits durch die Schnittstelle definierte Neutralelement verwendet. In einer bevorzugten Variante des Verfahrens wird allen Schnittstellen dasselbe additive Neutralelement zugeordnet.
Die Datenübertragungseinheiten sind mit Additionsschaltungen versehen, in welchen empfangene Datensignale miteinander addiert werden. Die gesendeten Neutralelemente verändern das erhaltene Benutzersignal in der Addition nicht, so dass das Benutzersignal an den Empfänger weitergeleitet werden kann. Werden jedoch zwei kollidierende Benutzersignale empfangen, so wird dies mittels der Additionsschaltung erkannt.

Durch die erfindungsgemässe Verwendung eines definierten additiven Neutralelementes lassen sich verschiedenartige, insbesondere synchrone und asynchrone Benutzergeräte oder Klienten mit ein- und demselben Accessmultiplexer verbinden, ohne dass eine aufwendige Konfiguration notwendig wäre oder Datenkollisionen unerkannt bleiben.

Weitere vorteilhafte Varianten des Verfahrens und vorteilhafte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: eine schematische Darstellung eines Kommunikationsnetzes mit mehreren Datenübertragungseinheiten und
- Figur 2: eine schematische Darstellung von zwei gesendeten Benutzersignalen und dem empfangenen addierten Signal.

### Wege zur Ausführung der Erfindung

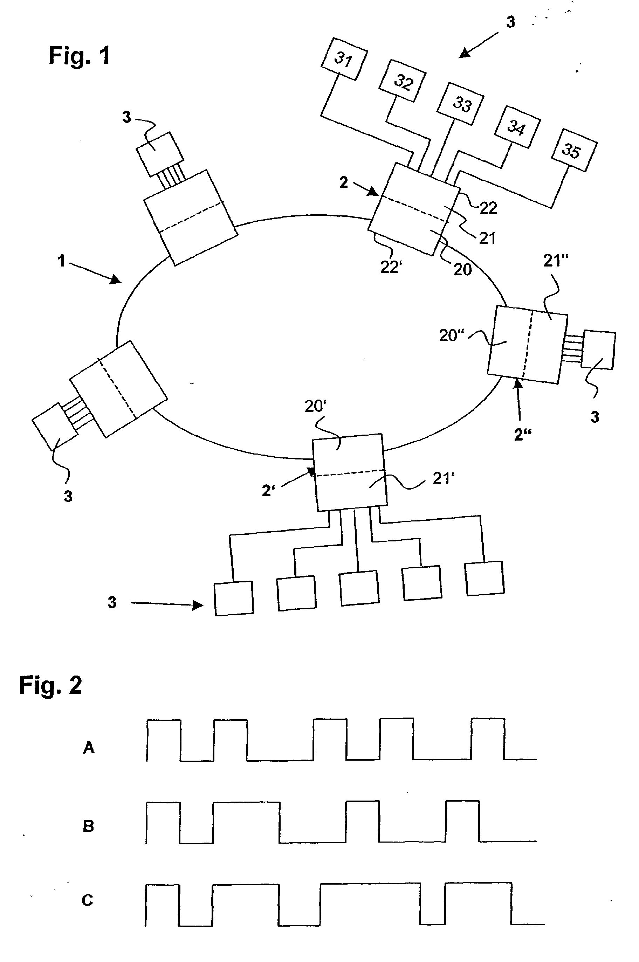

In Figur 1 ist schematisch ein breitbandiges Kommunikationsnetz 1 mit mehreren Datenkanälen dargestellt. Das Kommunikationsnetz 1 ist mit mehreren Datenübertragungseinheiten 2,2',2" oder Accessmultiplexern verbunden, wobei die Datenübertragungseinheiten je aus einem netzseitigen und einem benutzerseitigen Teil bestehen. Der netzseitige Teil 20,20',20" beinhaltet handelsübliche schnelle breitbandige Übertragungsmittel. In der hier beschriebenen Ausführungsform ist die Datenübertragungseinheit direkt mit dem Kommunikationsnetz verbunden. In einer anderen Ausführungsform lässt sich die erfindungsgemässe Datenübertragungseinheit auch als Verbindungsgerät zwischen übergeordneten, mit dem Kommunikationsnetz verbundenen Access- oder Transport-Multiplexern und Benutzergeräten einsetzen.
Der benutzerseitige Teil 21,21',21" weist ebenfalls bekannte, handelsübliche Verbindungsmittel zur Schnittstellenverbindung mit den Benutzergeräten auf. Benutzerseitig sind Klienten oder Benutzergeräte 3,31,32,33,34,35 an die Datenübertragungseinheit 2,2',2" anschliessbar. Derartige Benutzergeräte sind beispielsweise Telephonapparate, Computer, Drucker, Faxgeräte oder Modems. Diese Benutzergeräte können verschiedenartige, synchrone wie auch asynchrone Schnittstellen aufweisen. So ist in diesem Beispiel der benutzerseitige Teil 21 der ersten Datenübertragungseinheit 2 mit folgenden Benutzergeräten verbunden: das Benutzergerät mit der Bezugsziffer 31 weist eine RS232-Schnittstelle, das Gerät 32 eine RS422-Schnittstelle auf, das Gerät 33 eine 485-Schnittstelle, das Gerät 34 eine Ethernet-Schnittstelle und das Gerät 35 ist ein Telephon.
Jedes dieser Benutzergeräte 31,32,33,34,35 liefert nun über eine Schnittstelle ein anderes Benutzersignal an die erste Datenübertragungseinheit 2, wobei die ersten zwei asynchron und somit nicht busfähig sind, die anderen schon.

Erfindungsgemäss weist nun die Datenübertragungseinheit 2 mindestens ein Zuordnungsmittel 22,23,24,25,26 auf, um den jeweiligen Schnittstellen der Benutzergeräte 31,32,33,34,35 ein additives Neutralelement zuzuordnen. Vorzugsweise ist sowohl benutzer-, wie auch netzseitig ein Zuordnugnsmittel vorhanden.

Vorzugsweise ist für jede asynchrone benutzerseitige Schnittstelle der Datenübertragungseinheit 2 ein Zuordnungsmittel 22,23,24,25,26 vorhanden. Vorzugsweise weisen auch die synchronen Schnittstellen ein derartiges Zuordnungsmittel auf.

Unter einem additiven Neutralelement wird ein digitaler Wert verstanden, welcher bei Addition mit einem anderen Element dieses andere Element wiedergibt. Dieses additive Neutralelement, welches in das Kommunikationsnetz gesendet wird, definiert den Ruhezustand des Benutzergerätes, das heisst, den Zustand, in welchem keine Benutzersignale übermittelt werden. Das additive Neutralelement wird somit einem Nullvektor des Kommunikationsnetzes gleichgesetzt.

Im Falle einer synchronen Schnittstelle, wird vorzugsweise das bereits vorhandene Nullelement verwendet. Bei der Zuordnung des additiven Neutralelements für asynchrone Schnittstellen löst das Zuordnungsmittel einen elektrischen Pegel der Schnittstelle von einem logischen Pegel und konvertiert den Zustand "aktiv" und den Zustand "inaktiv" derart, dass "inaktiv" einem additiven Neutralelement entspricht. Für die RS232 Schnittstelle, welche lediglich einen aktiven und einen passiven Zustand kennt, wird der passive Zustand dem logischen Zustand EINS als Neutralelement zugeordnet. Der RS422 Schnittstelle, welche zwischen einer positiven und negativen Spannungsdifferenz unterscheidet, wird als Neutralelement der logische Zustand EINS für die positive Spannungsdifferenz gegeben. RS485 kennt bereits drei Zustände, nämlich AKTIV, INAKTIV und HOCHOHMIG, das Neutralelement ist somit das bereits vorhandene Signal HOCHOHMIG. Das Ethernet kennt ebenfalls drei Zustände und wird wie RS485 behandelt. In der Telephonie sind unzählig viele Zustände bekannt, die durch Abtasten digitalisiert werden, so dass 256 Zustände vorhanden sind. Der Wert, bei welchem kein Laut übertragen wird, entspricht dabei dem Neutralelement. Vorzugsweise werden alle Schnittstellen einheitlich behandelt, das heisst, die Neutralelemente werden in identische Nullvektoren derselben Länge umgelegt. Wird die Telephonie im Kommunikationsnetz mitberücksichtigt, so wird vorzugsweise ein Vektor verwendet, welcher 256 Zustände zu bezeichnen vermag. Bei der RS232 Schnittstelle geschieht dies beispielsweise dadurch, dass jeweils gewartet wird, bis 8 Bits angekommen sind.

Das Kommunikationsnetz 1 stellt Datenkanäle zwischen Datenübertragungseinheiten zur Verfügung. Sollen nun von einem Benutzergerät, beispielsweise Gerät 31, Datensignale gesendet werden, beispielsweise über einen ersten Datenkanal 10 des Kommunikationsnetzes 1 an die zweite Datenübertragungseinheit 2', so werden diese Datensignale transparent übertragen. Ein derartiges gesendetes Datensignal ist in Figur 2 mit der Bezugsziffer A bezeichnet. Die Darstellung zeigt ein Bitmuster, das sequentiell oder parallel übertragen respektive empfangen wird. Die restlichen Benutzergeräte sind jedoch auf den Nullvektor gesetzt, welcher ebenfalls ständig übertragen wird.

Kollisionen bei der Datenübermittlung entstehen, wenn bei einem Gerät, welches Daten über verschiedene Kanäle empfängt, bei mehr als einem Kanal die Daten nicht gleich dem Nullvektor sind. Dies ist auf zwei Arten möglich: Entweder sendet ein zweites Benutzergerät 3, beispielsweise einer dritten Datenübertragungseinheit 2", ebenfalls Datensignale über einen zweiten Datenkanal 11, oder die Datensignale des Benutzergeräts 31 werden redundant über den zweiten Datenkanal 11 übertragen. Ein derartiges zweites Datensignal ist in Figur 2 mit der Bezugsziffer B bezeichnet. In beiden Fällen empfängt die zweite Datenübertragungseinheit 2' kollidierende Datensignale, was im Stand der Technik normalerweise dazu führen würde, dass nachfolgende Signale aus einem Datenkanal die Signale aus dem anderen Kanal überschreiben würden. Deshalb weist die zweite Datenübertragungseinheit 2' ein Additionsmittel auf, welches die von beiden Datenkanälen 10,11 erhaltenen Datensignale A,B addiert und mit einer Modulofunktion versieht. Vorzugsweise wird dabei modulo 256 verwendet, und es wird eine Limitierung auf einen Maximalwert vorgenommen, um auch die Telephonie mit einzubeziehen. Als Additionsmittel eignet sich insbesondere eine Additionsschaltung. Diese wirkt beispielsweise gemäss A-law oder µ-law, das heisst, es werden zwei gemäss A-law respektive µ-law codierte Signale decodiert, addiert, und die Summe wird wieder codiert. Die durch die Additionsschaltung erhaltene Summe der Datensignale ist in Figur 2 mit der Bezugsziffer C bezeichnet. Da dieses Signal nicht mehr einem bekannten Übertragungsprotokoll entspricht, erkennt die zweite Datenübertragungseinheit 2' eine Datenkollision und kann entsprechende Aktionen auslösen, um die beteiligten Sende- und Empfangseinheiten auf diese Kollision aufmerksam zu machen. Dies ist sinnvoll, wenn die Datenkanäle digitale Nutzdaten übertragen.

Falls die beiden Datenkanäle Audiosignale für Telephonieverbindungen codieren, so entspricht die Addition durch die Additionsschaltung einer Summation der beiden Audiosignale. Dies ist für eine Konferenzschaltung erwünscht, so dass keine Datenkollision signalisiert wird. Die Limitierung auf einen Maximalwert entspricht einer Limitierung auf eine maximale Lautstärke des Summen-Audiosignals.

Zum besseren Verständnis der Funktionsweise wurde im obengenannten Beispiel eine Sende- und eine Empfängerseite angenommen. Es versteht sich jedoch von selber, dass jede Datenübertragungseinheit 2,2',2" sowohl zu sendende Datensignale übermittelt, wie auch, dass sie aus dem Kommunikationsnetz empfangene Datensignale an seine Benutzergeräte weiterleitet. Damit die Datenübertragungseinheiten mit asynchronen Teilnehmern an einer datenkollisionsfesten Cross-Connect-Verbindung teilnehmen kann, müssen sie das erfindungsgemässe Additionsmittel wie auch das Zuordnungselement aufweisen. Es ist jedoch möglich, dass einzelne mit dem Kommunikationsnetz verbundenen Access-Multiplexer über kein Zuordnungselement verfügen. Dann nämlich, wenn sie lediglich mit Benutzergeräten mit datenbusfähigen Schnittstellen verbunden sind, deren Neutralelemente bereits dem Nullvektor des Kommunikationsnetzes entsprechen.

Vorteilhaft ist, dass jederzeit neue Benutzergeräte an die Access-Multiplexer angeschlossen werden können oder bestehende Geräte durch andere Typen ausgewechselt werden können. Der entsprechenden Datenübertragungseinheit muss lediglich mitgeteilt werden, welchen Schnittstellentyp das neue oder ausgewechselte Benutzergerät aufweist, damit die Zuordnung des additiven Neutralelements korrekt erfolgen kann.

### Bezugszeichenliste

- 1: Kommunikationsnetz
- 2: Erste Datenübertragungseinheit
- 2': Zweites Datenübertragungseinheit
- 2": Dritte Datenübertragungseinheit
- 20: erster netzseitiger Teil
- 20': zweiter netzseitiger Teil
- 20": dritter netzseitiger Teil
- 21: erster benutzerseitiger Teil
- 21': zweiter benutzerseitiger Teil
- 21": dritter benutzerseitiger Teil
- 22,23,24,25,26: Zuordnungsmittel
- 3, 31,32,33,34,35: Benutzergeräte

- A: Erstes Sendesignal
- B: Zweites Sendesignal
- C: Empfangssignal

## Patentansprüche

1. Verfahren zur Erstellung einer digitalen synchronen Cross-Connect-Verbindung zwischen Datenübertragungseinheiten (2,2',2"), welche mit Schnittstellen von Benutzergeräten (3) verbunden sind, **dadurch gekennzeichnet, dass** asynchronen Schnittstellen ein additives Neutralelement zugeordnet wird und dass Datensignale, welche in einer Datenübertragungseinheit (2,2',2") über verschiedene Datenkanäle empfangen worden sind, miteinander addiert werden.

2. Verfahren nach Anspruch 1, **dadurch gekennzeichnet, dass** die asynchronen Schnittstellen zugeordneten Neutralelemente und Neutralelemente von synchronen Schnittstellen Nullvektoren zugeordnet werden, welche alle dieselbe Länge aufweisen.

3. Verfahren nach Anspruch 1, **dadurch gekennzeichnet, dass** die Addition auf einen Maximalwert begrenzt wird.

4. Verfahren nach Anspruch 1, **dadurch gekennzeichnet, dass** das Neutralelement einem inaktiven Zustand des Benutzergerätes (3) zugeordnet wird.

5. Verfahren nach Anspruch 1, **dadurch gekennzeichnet, dass** nach erfolgter Übermittlung von Daten bis zur Übermittlung erneuter Daten die Datenübertragungseinheit (2,2',2") das additive Neutralelement überträgt.

6. Datenübertragungseinheit zur Erstellung einer digitalen synchronen Cross-Connect-Verbindung zwischen an ihn über Schnittstellen anschliessbaren Benutzergeräten (3) und einem mehrkanaligen Kommunikationsnetz (1), **dadurch gekennzeichnet, dass** die Datenübertragungseinheit (2,2',2") ein Zuordnungsmittel (22,23,24,25,26) zur Zuordnung eines additiven Neutralelementes an Schnittstellen der Benutzergeräte (3) und mindestens ein Additionsmittel zur Addition von über verschiedene Kanäle des Kommunikationsnetzes (1) empfangene Datensignale aufweist.

7. Datenübertragungseinheit nach Anspruch 6, **dadurch gekennzeichnet, dass** allen additiven Neutralelementen Nullvektoren zugeordnet sind, welche alle dieselbe Länge aufweisen.

8. Datenübertragungseinheit nach Anspruch 6, **dadurch gekennzeichnet, dass** das Additionsmittel Mittel zur Limitierung der addierten Datensignale aufweist.

9. Datenübertragungseinheit nach Anspruch 6, **dadurch gekennzeichnet, dass** die Additionsschaltung eine 256-Modulofunktion aufweist.

10. Datenübertragungseinheit nach Anspruch 6, **dadurch gekennzeichnet, dass** die Additionsschaltung eine A-law oder µ-law-Schaltung aufweist.

11. Datenübertragungseinheit nach Anspruch 6, **dadurch gekennzeichnet, dass** das Additionsmittel und Zuordnungsmittel permanent aktiv ist.
